# EUROPEAN PATENT APPLICATION

(11) **EP 4 403 728 A1**
(43) Date of publication of application: **24.07.2024**
(21) Application number: 22889469.7
(22) Date of filing: 07.11.2022
(51) Int. Cl.: E04H 12/00, E04H 12/24, H02G 7/20

(54) **STRAIN TOWER**

(30) Priority: 08.11.2021 CN 202111314551
(71) Applicant: Shanghai Shemar Power Engineering Co., Ltd, Shanghai 200050 (CN)
(72) Inventor: LI, Yanlin, Shanghai 200050 (CN); WANG, Xinlong, Shanghai 200050 (CN); WANG, Chen, Shanghai 200050 (CN)
(74) Representative: Mewburn Ellis LLP
(86) International application number: PCT/CN2022/130389
(87) International publication number: WO 2023/078448

(57) **Abstract**

The present application discloses a strain tower, comprising a tower body, and at least one composite crossarm assembly. The at least one composite crossarm assembly is fixedly connected to the tower body. The composite crossarm assembly comprises: at least one composite post insulator and a link fitting. The link fitting comprises an end link fitting and a wire connecting portion. The composite post insulator is fixedly connected to the end link fitting. The wire connecting portion comprises wire hanging plates and a jumper connecting piece. By providing a jumper connecting piece on the end link fitting, a jumper can be directly hung at the end of the composite crossarm, thereby omitting a jumper insulator, simplifying the composite crossarm structure, reducing the structural weight of the end of the composite crossarm, and improving the economic efficiency.

## Description

### TECHNICAL FIELD

The present application relates to the field of power transmission, and more particularly, to a tension tower.

### BACKGROUND

Transmission lines relates to an important lifeline of national economic development. Once the transmission lines in a region fail, it may cause inestimable economic losses to users in the area the transmission lines serve. Therefore, ensuring the normal operation of the transmission lines is extremely important to daily life and economic development. The tension tower is a load-bearing tower in the transmission lines, and has high requirements for force-bearing and wind deflection, thus, the tension tower makes a great contribution to ensuring the normal operation of the transmission lines.

The tension tower is provided with a jumper, and in the conventional tension tower, the jumper connection is generally implemented in the form of a jumper string, which has the disadvantages of complex structure and high requirements on the force-bearing of the tower body due to the heavy weight of the connection structure.

### SUMMARY

An object of the present application is to provide a tension tower without a jumper string, which reduces an overall weight of a crossarm and optimizes a connection mode of jumpers.

In order to solve the above-mentioned problems, a solution adopted by the present application is to provide a tension tower, including a tower body and at least one composite crossarm assembly fixedly connected to the tower body. The composite crossarm assembly includes at least one composite post insulator and a link fitting. The link fitting includes an end link fitting and a wire connecting portion, the composite post insulator is fixedly connected to the end link fitting, and the wire connecting portion includes an attachment plate and a jumper connecting member.

The wire connecting portion further includes a connecting member fixedly connected to the end link fitting, two attachment plates are provided, and the two attachment plates are distributed on two sides of the connecting member along a wire extension direction.

The attachment plate is rotatably connected to the connecting member.

The connecting member includes a connecting portion, a first connecting plate, and a second connecting plate, and the first connecting plate and the second connecting plate are respectively provided on two sides of the connecting portion along a direction perpendicular to the wire extension direction.

The jumper connecting member is provided below the connecting member and/or on a side of the connecting member away from the end link fitting.

The composite crossarm assembly includes two composite post insulators, and the end link fitting includes two flange cylinders, and each of the composite post insulators is fixedly connected to one flange cylinder.

The two flange cylinders are arranged in a V-shape, and ends of the two flange cylinders away from the composite post insulators are fixedly connected to the wire connecting portion.

The composite crossarm assembly further includes a composite suspension insulator, and the end link fitting includes a connecting lug configured to hang the composite suspension insulator.

Wires located on two sides of the tower body are respectively hung on the two attachment plates along a wire extension direction, and a jumper is electrically connected to the wires located at the two sides of the tower body and hung on the jumper connecting member.

The jumper is hung on the jumper connecting member by a clamp.

Beneficial effects of the present application include: by optimizing the design of the tension composite crossarm link fitting, the end link fitting and the wire connecting portion are combined, so that the jumper can be directly hung on the jumper connecting member through the clamp, the jumper string or a jumper crossarm is eliminated, the structure of crossarm is simplified, the cost is reduced, and the reliability of the tension tower is improved. The wire is hung on the attachment plate by the tension fitting, and the attachment plate and the connecting portion are arranged in a rotatable connection, so that an interaction force between the attachment plate and the connecting portion is reduced to a certain extent, thereby prolonging a service life of the fitting. In addition, according to different split forms of the split wire, such as a vertical split or a horizontal split, a form of jumper from a side or bottom of the link fitting is designed respectively, so as to facilitate the hanging of the split wire in different forms, and a layer height is reduced to some extent when the jumper connecting member is arranged on a side of the link fitting away from the tower body.

### BRIEF DESCRIPTION OF THE DRAWINGS

In order to provide a clearer explanation of the solutions in the embodiments of the present application, the accompanying drawings required in the description of the embodiments will be briefly introduced below. Obviously, the accompanying drawings in the following description are only some embodiments of the present application. For those skilled in the art, other drawings can also be obtained based on these drawings without creative labor.
FIG. 1 is a schematic structural view of a transmission tower according to an embodiment of the present application;
FIG. 2 is a schematic enlarged view of a portion A in FIG. 1;
FIG. 3 is a schematic structural view of a link fitting according to an embodiment of the present application;
FIG. 4 is a schematic partial structural view of a transmission tower according to another embodiment of the present application.
FIG. 5 is a schematic partial structural diagram of a transmission tower according to yet another embodiment of the present application.

### DETAILED DESCRIPTION OF THE EMBODIMENTS

The following provides a clear and complete description of the solutions in the embodiments of the present application in conjunction with the accompanying drawings. Obviously, the described embodiments are only a part of the embodiments of the present application, not all of them. Based on the embodiments in the present application, all other embodiments obtained by those skilled in the art without creative labor fall within the protection scope of the present application.

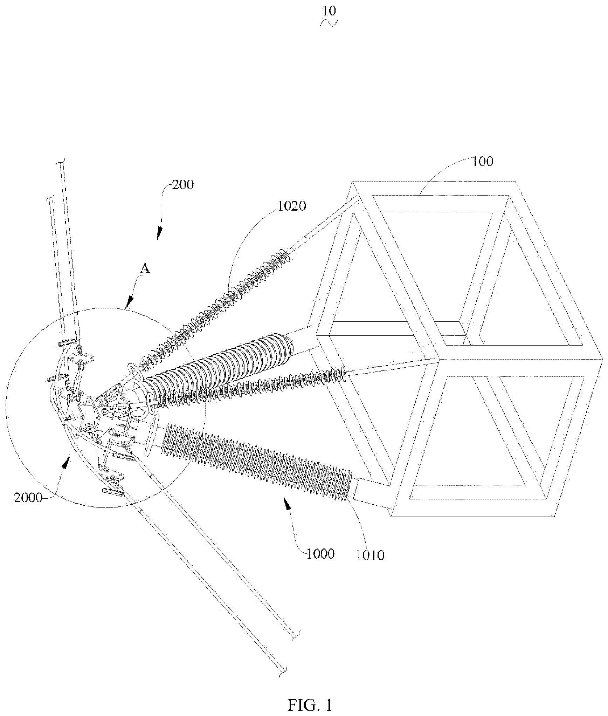

Referring to FIGS. 1-3, a tension tower 10 includes a tower body 100 (only a partial structure of the tower body 100 is illustrated in FIG. 1) and a composite crossarm assembly 200. An end of the composite crossarm assembly 200 is fixedly connected to the tower body 100, and the other end of the composite crossarm assembly 200 is a free end for hanging wires. Specifically, the composite crossarm assembly 200 includes a composite crossarm 1000 and a link fitting 2000. An end of the composite crossarm 1000 is fixedly connected to the tower body 100, and the other end of the composite crossarm 1000 is fixedly connected to the link fitting 2000 to form the free end of the composite crossarm assembly 200.

The composite crossarm 1000 is made of a composite material, and has many advantages, such as high strength, light weight, corrosion resistance, easy processing, designability, good insulation, and the like. The composite crossarm 1000 can increase the distance from the wire to the ground without increasing the height of the tower, which can effectively ensure the safety of surrounding electrical environment, and eliminate the potential safety hazard of power outage caused by insufficient electric distance between the wire and the tower body 100 due to excessive wind deflection.

Specifically, the composite crossarm 1000 includes two composite post insulators 1010 and two composite suspension insulators 1020. In order to enhance structural stability, an end of each of the two composite post insulators 1010 and an end of each of the two composite suspension insulators 1020 are fixedly connected to four nodes of the tower body 100, respectively. The other end of each of the two composite post insulators 1010 and the other end of each of the two composite suspension insulators 1020 are fixedly connected to each other through the link fitting 2000, and then to hang the wires. Further, the composite suspension insulator 1020 is provided above the composite post insulator 1010, the wire is hung on the composite crossarm 1000. The composite suspension insulator 1020 is subjected to a tensile load, the composite post insulator 1010 bears pressure, and a plurality of stable triangular structures are formed between the composite crossarms 1000 and the tower body 100, thereby achieving a stable support for the wire. Of course, in other embodiments, the composite crossarm may also be connected to any location of the tower body, as long as a stable connection between the two is ensured. The composite crossarm assembly may include only one composite post insulator, or may include two composite post insulators and one composite suspension insulator, or may include one composite post insulator and three composite suspension insulators, as long as the structure of the link fitting is capable of being matched with and fixedly connected to the composite crossarm, which is specifically subject to actual requirements, and is not specifically limited herein. In addition, the tower body may be provided with a corresponding number of composite crossarm assemblies, such as two, three, and the like, according to actual use requirements, which is not specifically limited herein. Preferably, when at least two composite crossarm assemblies are provided, the at least two composite crossarm assemblies are distributed on two sides of the tower body, i.e., when an even number of composite crossarm assemblies is provided, the number of composite crossarm assemblies on each of the two sides of the tower body is the same, and when an odd number of composite crossarm assemblies is provided, the number of composite crossarm assemblies on a side of the tower body differs by one from the number of composite crossarm assemblies on the other side of the tower body, so as to maximally balance the gravity of the composite crossarm borne by the tower body.

The link fitting 2000 includes an end link fitting 2200 and a wire connecting portion 2100. Specifically, the composite crossarm 1000 is fixedly connected to the end link fitting 2200, and the wire connecting portion 2100 is configured to hang the wire. The end link fitting 2200 and the wire connecting portion 2100 may be fixedly connected by welding, bolting, or the like after being formed separately, or may be integrally formed during a production process to improve the overall structural strength, which is based on actual needs.

Specifically, the end link fitting 2200 includes two flange cylinders 2210, and ends of the two composite post insulators 1010 of the composite crossarm 1000 away from the tower body 100 are fixedly connected to the two flange cylinders 2210, respectively. The two flange cylinders 2210 are arranged in a V-shape, an end of each of the two flange cylinders 2210 abuts against each other and is fixedly connected to the wire connecting portion 2100, and the other end of each of the two flange cylinders 2210 is away from each other. The other end of each of the two flange cylinders 2210 away from each other is fixedly connected to the two composite post insulators 1010, respectively, so that the two composite post insulators 1010 to which the two flange cylinders 2210 are respectively connected are arranged in a V-shape. Preferably, a reinforcing plate is provided between ends of the two flange cylinders 2210 away from the wire connecting portion 2100, the reinforcing plate is a plate having a uniform thickness, and the reinforcing plate is fixedly connected to the two flange cylinders 2210 at the same time to enhance the overall structural strength of the end link fitting 2200. The reinforcing plate is provided in a V-shaped opening between the two flange cylinders 2210, and a plate surface of the reinforcing plate is horizontally arranged, and a horizontal plane in which a center of gravity of the reinforcing plate is located is the same as a horizontal plane in which the axes of the two flange cylinders 2210 are located. Of course, in other embodiments, the end link fitting may be fixedly connected to the composite post insulator by other connection structures, such as connecting plates, angle bars, and the like.

Further, in order to hang the composite suspension insulator 1020 of the composite crossarm 1000, the end link fitting 2200 is further provided with two connecting lugs 2220. Each flange cylinder 2210 is provided with one connecting lug 2220, and the connecting lug 2220 is fixedly connected to an outer peripheral surface of the flange cylinder 2210 and is located at an upper portion of the flange cylinder 2210 for connecting the composite suspension insulator 1020 to a top of the composite post insulator 1010. The connecting lug 2220 is a plate having a uniform thickness, the connecting lug 2220 is provided with a hanging hole. The composite suspension insulator 1020 is hung in the hanging hole through a U-shaped ring. Preferably, in order to optimize structural stresses, a vertical plane in which a center of gravity of the connecting lug 2220 is located is the same as a vertical plane in which an axis of the flange cylinder 2210 with the connecting lug 2220 is located. In this case, axes of the composite suspension insulator 1020 and the composite post insulator 1010 which are fixedly connected to the same flange cylinder 2210 are also located in the same vertical plane. The composite suspension insulator 1020 and the composite post insulator 1010 have the same force direction, so that under normal force conditions, no internal forces that constrain each other is generated due to their different force directions, and a load-bearing performance of the composite crossarm assembly 200 can be fully utilized. Further, in order to reinforce the structural strength of the connecting lug 2220, an end of the connecting lug 2220 abuts against the wire connecting portion 2100 along an axial direction of the flange cylinder 2210, and the other end of the connecting lug 2220 is provided with a baffle. Specifically, the baffle is provided on the outer peripheral surface of the flange cylinder 2210 perpendicular to the axis of the flange cylinder 2210, and the other end of the connecting lug 2210 abuts against a plate surface of the baffle.

In another embodiment, the composite crossarm includes a composite post insulator, three composite suspension insulators. An end of the composite post insulator and an end of each of the three composite suspension insulators are fixedly connected to four nodes of the tower body, respectively, and the other end of the composite post insulator and the other end of each of the three composite suspension insulators are fixedly connected to each other by a link fitting. Specifically, three composite suspension insulators are arranged at intervals around the composite post insulator. The axes of two of the three composite suspension insulators are in the same plane as the axis of the composite post insulator; and the other of the three composite suspension insulators is located above the composite post insulator, and is at the same distance from each of the above-mentioned two composite suspension insulators, so that a stable triangular structure is formed between the composite crossarm and the tower body, thus greatly improving the stability performance of the composite crossarm. At this time, the end link fitting in the link fitting includes a flange cylinder, an end of the composite post insulator in the composite crossarm far away from the tower body is fixedly connected to the flange cylinder, three connecting lugs are provided on the flange cylinder, and the three connecting lugs are correspondingly located on the outer circumferential surface of the flange cylinder according to the setting positions of the three composite suspension insulators, so that the other ends of the three composite suspension insulators are fixedly connected to the other end of the composite post insulator. In other embodiments, the numbers of the composite post insulator and the composite suspension insulator in the composite crossarm are determined according to actual working conditions. At least one composite post insulator is provided. The specific structure of the link fitting is determined according to the numbers and the connecting structures of the composite post insulator and composite suspension insulator. Details are not repeated herein.

Further, the wire connecting portion 2100 is configured to hang the wire, and includes a connecting member 2110 and an attachment plate 2120. The attachment plate 2120 and the end link fitting 2200 are fixedly connected to the connecting member 2110. Two attachment plates 2120 are provided, and the two attachment plates 2120 are distributed on two sides of the connecting member 2110 in the wire extension direction. The attachment plate 2120 is provided with a wire hanging hole for hanging the wire.

In the tension tower 10, along the wire extension direction, the wires on two sides of the tower body 100 are disconnected, the wires on the two sides of the tower body 100 are fixedly connected to the tower body 100 through a tension fitting, respectively, and the wires on the two sides of the tower body 100 are electrically connected through a jumper (wire). Specifically, in the wire extension direction, the wire on a side of the tower body 100 is tensioned by a tension clamp which is connected to one of the attachment plates 2120 of the wire connecting portion 2100 by a tension fitting, while the wire on the other side of the tower body 100 is tensioned by the other tension clamp which is connected to the other attachment plate 2120 of the wire connecting portion 2100 by the other tension fitting. That is, the wires on the two sides of the tower body 100 are hung to the two attachment plates 2120 provided on two sides of the connecting portion 2111 by two tension fittings in the wire extension direction. Then, the jumper (wire) is electrically connected between the tension clamps on the two sides of the tower body 100 to realize power transmission. Of course, in other embodiments, the wires may not be disconnected. In this case, the wires located on the two sides of the tower body are tensioned by two tension clamps, respectively. A part of the wires located between the two tension clamps are hung to the attachment plate of the link fitting for supporting the wires.

The attachment plate 2120 is configured to hang the wire, and the tension tower 10 generally bears a large tensile force from the wires, so that there is a high requirement for the connection strength between the attachment plate 2120 and the connecting member 2110. In order to enhance the connection strength between the attachment plate 2120 and the connecting member 2110, the connecting member 2110 includes a connecting portion 2111, a first connecting plate 2112, and a second connecting plate 2113. The first connecting plate 2112 and the second connecting plate 2113 are respectively provided on the two sides of the connecting portion 2111 in a direction perpendicular to the wire extension direction.

Specifically, the connecting portion 2111 is a cylinder, a side surface of the attachment plate 2120 is fixedly connected to an outer peripheral surface of the connecting portion 2111, and the two ends of the attachment plate 2120 in the axial direction of the connecting portion 2111 abut against the first connecting plate 2112 and the second connecting plate 2113, respectively, that is, three side surfaces of the attachment plate 2120 are fixedly connected to the connecting member 2110. Compared with a structure in which only one side surface of the attachment plate 2120 is fixedly connected to the connecting member 2110, the connection stability of the structure is significantly enhanced.

Further, the first connecting plate 2112 is provided between the end link fitting 2200 and the connecting portion 2111, which increases a contact area between the end link fitting 2200 and the wire connecting portion 2100, so that the connection strength between the end link fitting 2200 and the wire connecting portion 2100 can be enhanced, thereby making the connection between the end link fitting 2200 and the wire connecting portion 2100 more convenient and stable. Preferably, the first connecting plate 2112 and the second connecting plate 2113 are arranged in parallel, and the attachment plate 2120 is arranged perpendicular to the first connecting plate 2112.

Further, in order to facilitate construction and mounting, the first connecting plate 2112 and/or the second connecting plate 2113 are provided with a plurality of connecting holes, which can be used for hoisting equipment or wires during the mounting process of the transmission lines. Preferably, the connecting holes are provided at the edges of the first connection plate 2112 and/or the second connection plate 2113, so as to facilitate the connection of wire.

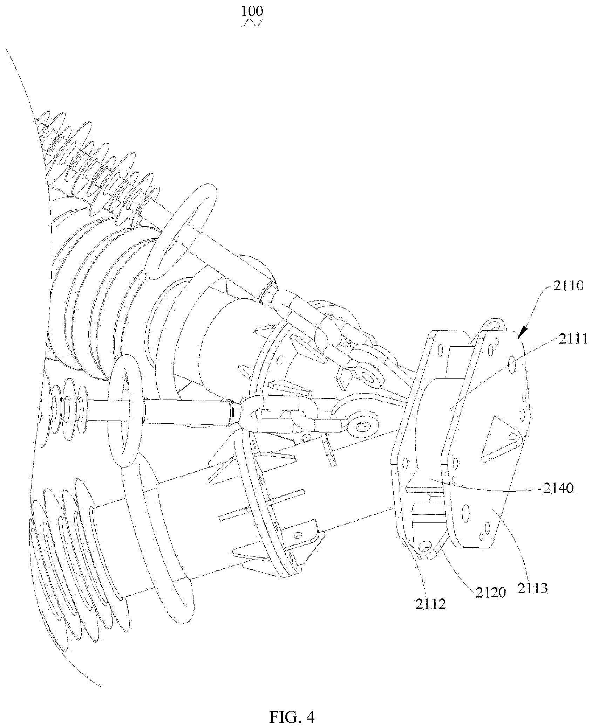

Since the wire swings with wind, when the attachment plate 2120 and the connecting member 2110 are fixedly connected, the force generated by the wire swing is directly transmitted to the attachment plate 2120 and acts on the connecting member 2110. Further, the various components of the link fitting 2000 are fixedly connected to each other, the link fitting 2000 and the composite crossarm 1000 are fixedly connected, and the composite crossarm assembly 200 and the tower body 100 are fixedly connected. Thus, the force acting on the attachment plate 2120 will directly act on the entire link fitting 2000 and be transmitted to the various structures of the transmission tower 10 through the link fitting 2000, thus affecting the connection between the various structures. In order to reduce the effect of wire swing on the overall structure of the tension tower 10, referring to FIG. 4, in another embodiment, a movable connection is provided between the attachment plate 2120 and the connecting member 2110. Specifically, the attachment plate 2120 and the connecting member 2110 are rotatably connected, and the strength of the force between the attachment plate 2120 and the connecting member 2110 is reduced by a relative rotation between the attachment plate 2120 and the connecting member 2110, thereby reducing the effect of the wire swing on the tension tower 10, and making the overall structure of the tension tower 10 more stable and reliable.

Further, when the wire is connected to the tower body 100, due to the gravity of the wire itself, the direction of the force exerted on the wire connecting portion 2100 by the wire is not precisely along the wire extension direction, but has a downward tilt angle, and the downward tilt angle is not constant due to the wire swing. Therefore, when the attachment plate 2120 and the connecting member 2110 are fixedly connected, a bending force is formed between the attachment plate 2120 and the connecting member 2110. As a result, the risk of failure of the connection between the attachment plate 2120 and the connecting member 2110 is increased. By providing the rotatable connection between the attachment plate 2120 and the connecting member 2110, the bending force between the attachment plate 2120 and the connecting member 2110 is automatically eliminated by the relative movement of the attachment plate 2120 and the connecting member 2110, so that a mutual force between the attachment plate 2120 and the connecting member 2110 is reduced, the connection reliability is improved, and the service life is prolonged.

Specifically, mounting holes are provided on opposite surfaces of the first connecting plate 2112 and the second connecting plate 2113, respectively. The attachment plate 2120 is provided with through holes. A rotating shaft extends through the through holes on the attachment plate 2120 and is mounted in the corresponding mounting holes on the first connecting plate 2112 and the second connecting plate 2113. In this way, the movable connection between the attachment plate 2120 and the first connecting plate 2112, and between the attachment plate 2120 and the second connecting plate 2113 is achieved. A rotation axis between the attachment plate 2120 and the connector 2110 is perpendicular to the wire extension direction.

Further, in order to prevent an accumulation of dirt in rotation structures from affecting the smoothness of relative rotation, a blocking plate 2140 is provided above the attachment plate 2120. Three sides of the blocking plate 2140 abut against the first connecting plate 2112, the connecting portion 2111, and the second connecting plate 2113, respectively. A projection of the blocking plate 2140 in a vertical direction can cover joints of the attachment plate 2120 with the first connecting plate 2112 and the second connecting plate 2113. The arrangement of the blocking plate 2140 can reduce the accumulation of dirt between the attachment plate 2120 and the connecting member 2110 to a certain extent, thereby ensuring the normal movement of the attachment plate 2120.

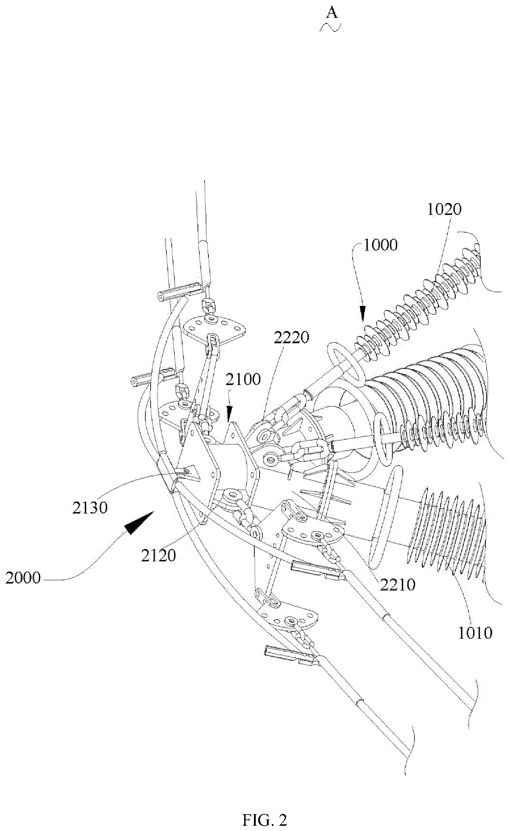

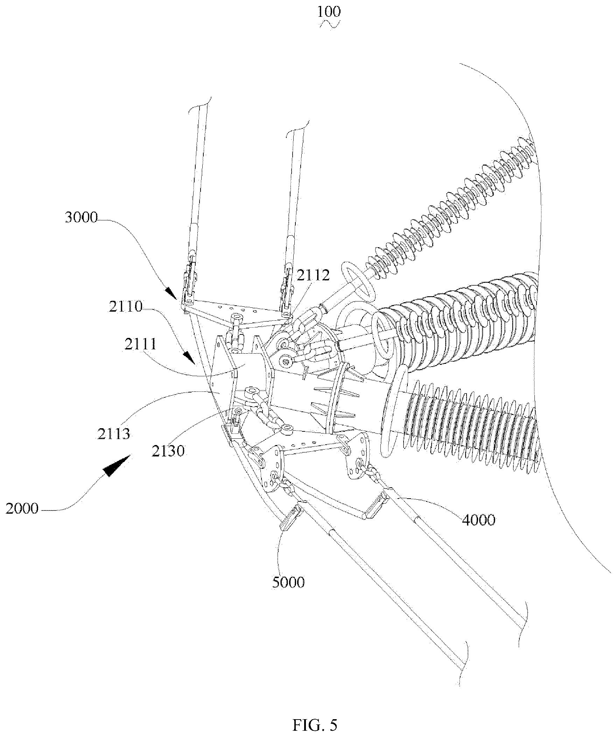

Further, referring to FIGS. 2 and 5, the wire connecting portion 2100 is further provided with a jumper connecting member 2130, and the jumper between the two tension fittings 3000 is directly hung to the jumper connecting member 2130 by the clamp.

In an embodiment, as shown in FIG. 5, the jumper connecting member 2130 is of a plate-like structure, and the jumper connecting member 2130 is fixedly connected below the connecting portion 2111. In order to enhance the connection strength of the jumper connecting member 2130, three sides of the jumper connecting member 2130 abut against the first connecting plate 2112, the connecting portion 2111, and the second connecting plate 2113, respectively. Such a structure of the jumper connecting member 2130 provided below the connector 2110 may facilitate hanging the jumper of the horizontal split wire. Specifically, the jumper connecting member 2130 is provided with a through hole in which the clamp is hung, and the jumper is clamped in the clamp, so as to be hung on the jumper connecting member 2130.

FIG. 5 shows the hanging and jumper manner of horizontal double split wire. Two wires with the same phase are arranged to be spaced at a predetermined distance horizontally, and are connected to the tension fitting 3000 at the same time. Specifically, the double split wire is composed of two split wires, each split wire is connected to the tension fitting 3000 on a side of the link fitting 2000 through a tension clamp 4000. The tension clamp 4000 is of a three-interface structure, a first interface of the tension clamp 4000 is fixedly connected to the wire, and a second interface of the tension clamp 4000 is connected to the tension fitting 3000 through the link fitting. Further, in addition to being fixedly connected to the end fitting 2000, the wire requires to be electrically connected to the jumper. An end of the jumper is fixedly connected to a third interface of the tension clamp 4000 through a splicing fitting 5000, and is electrically connected to the wire clamped in the tension clamp 4000. The other end of the jumper is fixedly connected to a third interface of the other tension clamp 4000 on the other side of the link fitting 2000 by the splicing fitting 5000. The connection structures of the horizontal double split wires on the two sides of the link fitting 2000 are the same, and details are not described herein. Of course, in other embodiments, the wire may not necessarily be a double split wire, and the wire may be a four split wire or a six split wire or the like, and the specific tension fitting is subject to actual requirements and is not specifically limited herein.

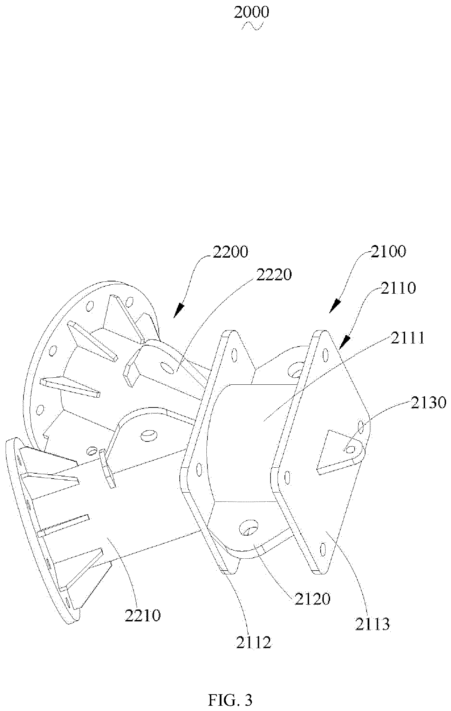

Further, in an embodiment, as shown in FIGS. 2 and 3, in order to further reduce the height of the tower body 100 by reducing the layer spacing, the jumper connecting member 2130 may be provided on a side of the connecting member 2110 away from the tower body 100, thereby eliminating a vertical space occupied by the jumper connecting member 2130. The jumper connecting member 2130 is fixedly connected to a side of the connecting member 2110 away from the end link fitting 2200. Specifically, the jumper connecting member 2130 is provided on the second connecting plate 2113 and is arranged perpendicular to the second connecting plate 2113, and the jumper is hung to the jumper connecting member 2130 by the clamp. In this arrangement, the space occupied by the jumper wire is transferred from the vertical direction to the horizontal direction, so that an influence of the jumper sag can be reduced to a certain extent, and the layer spacing can be reduced. Further, the arrangement of this structure facilitates the jumper arrangement of the vertical split wire. A specific connection manner of the vertical split wire is substantially the same as that of the above-mentioned horizontal split wire, and details are not described herein.

In other embodiments, in the link fitting, two jumper connecting members may be mounted below the connecting member and on the side of the connecting member away from the tower body, respectively, so as to improve the versatility of the link fitting, which is not specifically limited herein, subject to actual requirements.

In summary, in the present application, by optimizing the design of the link fitting of the tension composite crossarm, the jumper can be directly hung to the link fitting through the clamp, the jumper string or the jumper crossarm is omitted, so that the composite crossarm structure is simplified, the cost is reduced and the reliability of the tension tower is improved. Further, by providing the attachment plate for hanging the tension fitting with the movable connection, the influence of the wire wind deflection and swing on the end link fitting is reduced, the interaction force between the attachment plate and the connecting member is reduced, and the service life of the end link fitting is prolonged. In addition, according to the vertical or horizontal arrangement of the split wires, the wiring modes from a side or bottom of the composite crossarm are designed, so as to be suitable for jumper connections of the split wires of different types. Moreover, the tower height can be reduced and the cost can be saved by the wiring mode from the side of the composite crossarm.

The above description is merely embodiments of the present application, and is not therefore intended to limit the scope of the present application. Equivalent structural or equivalent process transformations made using the contents of the description and drawings of the present application, or direct or indirect use in other related technical fields, are equally included within the scope of the present application.

## Claims

1. A tension tower, comprising:
a tower body; and
at least one composite crossarm assembly fixedly connected to the tower body,
wherein the composite crossarm assembly comprises: at least one composite post insulator and a link fitting, the link fitting comprises an end link fitting and a wire connecting portion, the composite post insulator is fixedly connected to the end link fitting, and the wire connecting portion comprises an attachment plate and a jumper connecting member.

2. The tension tower of claim 1, wherein the wire connecting portion further comprises a connecting member fixedly connected to the end link fitting, two attachment plates are provided, and the two attachment plates are distributed on two sides of the connecting member along a wire extension direction.

3. The tension tower of claim 2, wherein the attachment plate is rotatably connected to the connecting member.

4. The tension tower of claim 2, wherein the connecting member comprises a connecting portion, a first connecting plate, and a second connecting plate, and the first connecting plate and the second connecting plate are respectively provided on two sides of the connecting portion along a direction perpendicular to the wire extension direction.

5. The tension tower of claim 2, wherein the jumper connecting member is provided below the connecting member and/or on a side of the connecting member away from the end link fitting.

6. The tension tower of claim 1, wherein the composite crossarm assembly comprises two composite post insulators, and the end link fitting comprises two flange cylinders, and each of the composite post insulators is fixedly connected to one flange cylinder.

7. The tension tower of claim 6, wherein the two flange cylinders are arranged in a V-shape, and ends of the two flange cylinders away from the composite post insulators are fixedly connected to the wire connecting portion.

8. The tension tower of claim 1, wherein the composite crossarm assembly further comprises a composite suspension insulator, and the end link fitting comprises a connecting lug configured to hang the composite suspension insulator.

9. The tension tower of claim 1, wherein wires located on two sides of the tower body are respectively hung on the two attachment plates along a wire extension direction, and a jumper is electrically connected to the wires located at the two sides of the tower body and hung on the jumper connecting member.

10. The tension tower of claim 9, wherein the jumper is hung on the jumper connecting member by a clamp.
